**Europäisches Patentamt**

**European Patent Office**

**Office européen des brevets**

(19)

(11) Veröffentlichungsnummer: **0 254 914**

**A2**

(12) # EUROPÄISCHE PATENTANMELDUNG

(21) Anmeldenummer: **87109714.3**

(22) Anmeldetag: **06.07.87**

(51) Int. Cl.⁴: **B07C 3/16**

(30) Priorität: **08.07.86 DE 3622942**

(43) Veröffentlichungstag der Anmeldung:
**03.02.88 Patentblatt 88/05**

(84) Benannte Vertragsstaaten:
**AT BE CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Wecker, Paul, Dipl.-Ing.**
**Hauptstrasse 46**
**D-8901 Egling(DE)**

(54) **Magnetcodierleiste.**

(57) Die Erfindung bezieht sich auf eine Magnetcodierleiste aus Kunststoff, in der in zylinderförmigen in Reihe nebeneinanderliegenden Öffnungen umklappbare Magnetscheibchen gelagert sind, die an ihren Stirnflächen unterschiedliche Polarisierung aufweisen, und die in ihrer jeweiligen Endlage von Haftplättchen aus einer Schicht eines weichmagnetischen Pulvers bestehen, durch Weichmagnetschluß gehalten werden. Bekannte Leisten dieser Art haben Nachteile bezüglich ihrer Stabilität und durch das spannabhebende Herstellverfahren treten Oberflächenrauhigkeiten in den Öffnungen für die Magnetplättchen ein, die zu Fehlfunktionen Anlaß geben. Die Erfindung beseitigt diese Nachteile dadurch, daß die Magnetcodierleiste aus zwei Kunststoffteilen 1, 2 aus Spritzguß und einem die beiden Kunststoffteile umfassenden U-förmig ausgebildeten Metallbügel 3 besteht. Das eine Kunststoffteil 1 ist ebenfalls U-förmig ausgebildet und die Haftplättchen auf seiner Innensohle 5 sind entsprechend der Anzahl der Magnetscheibchen 6 in Vertiefungen 7 eingelegt sind und eine dünnwandige Kunststoffolie 8 darüber gespannt ist, wobei das weichmagnetische Pulver für die Haftplättchen 4 im Magnetfeld langsam ausgehärtet ist. Die Öffnungen 9 für die Magnetscheibchen 6 befinden sich in dem als Leiste ausgebildeten zweiten Kunststoffteil 2. Diese Leiste wird mit den Öffnungen 9 nach unten in das erste Kunststoffteil 1 eingelegt.

## Magnetcodierleiste

Die Erfindung betrifft eine Magnetcodierleiste aus Kunststoff, in der in zylinderförmigen, in Reihen nebeneinanderliegenden Öffnungen umklappbare Magnetscheibchen gelagert sind, die an ihren Stirnflächen unterschiedliche Polarisierung aufweisen und die in ihrer jeweiligen Endlage von Haftplättchen, die aus einer Schicht eines weichmagnetischen Pulvers bestehen, durch Weichmagnetenschluß gehalten werden.

Zur Steuerung von Werkstücken z.B. in vollautomatisch oder teilautomatisch angelegten Fertigungsstraßen wird zur Kennzeichnung der einzelnen Fertigungsschritte an den Werkstücken eine Magnetcodierleiste verwendet, die das Werkstück bzw. den jeweiligen Werkstückträger in die jeweils vorgesehene Fertigungsstation hineinsteuert.

Eine derartige Magnetcodierleiste ist z.B. in der europäischen Patentanmeldung 100 896 beschrieben. Die Magnetcodierleiste weist einen Halter auf, in dem scheibenförmige Magnete in Bohrungen gelagert sind. Die Magnete haben an ihren Stirnflächen unterschiedliche Polarisierung. Der Durchmesser der Magnete ist geringfügig kleiner als der Durchmesser der Bohrungen, so daß die Magnete in den Bohrungen frei umklappen können, wenn ein äußeres Magnetfeld auf sie einwirkt. In einer jeweiligen Endlage wird jeder Magnet durch einen Weichmagnetschluß gehalten, der aus einer Schicht eines weichmagnetischen Pulvers besteht. Derartige Magnetcodierleisten werden wie oben bereits beschrieben, an Werkstückträgern angebracht, um diese mit dem Code eines Arbeitsplatzes ver sehen zu können.

Durch die Kunststoffausführung dieser bekannten Leiste und Befestigungsbohrungen in der Informationsleiste selbst, ist jedoch nur eine geringe äußere Formstabilität gegeben. Hohe Oberflächenrauhigkeit in der Magnetkammer ergibt sich durch ihr spannabhebendes Herstellverfahren, wodurch das Drehverhalten der Datenmagnete beeinträchtigt wird. Die verbleibende Materialstärke zwischen Datenmagneten und Haftplättchen ist zu groß und die Oberfläche nicht eben. Dies führt zu reduzierter Haftkraft und somit zu Informationsveränderung bei Erschütterungen der Leiste. Die Haftplättchen befinden sich außerdem an der Außenseite des Informationsträgers und können somit im Einsatz leicht beschädigt werden. Da die Haftplättchen eingeklebt sind, ist die magnetische Eigenschaft nicht optimal, weil durch den eingesetzten Kleber eine günstige Orientierung der Eisenspäne verhindert wird. Zudem besteht der Informationsträger aus zwei Hälften, die mit unlösbarem Klebstoff verbunden sind und somit ist eine Reparatur bei Bruch eines Datenmagneten nicht möglich.

Aufgabe der vorliegenden Erfindung ist es, eine Magnetcodierleiste zu schaffen, deren Funktionseigenschaften gegenüber der eingangs genannten Magnetcodierleiste verbessert sind.

Zur Lösung dieser Aufgabe wird die Magnetcodierleiste gemäß der Erfindung derart ausgebildet, daß sie aus zwei Kunststoffteilen aus Spritzguß und in einem die beiden Kunststoffteile umfassenden U-förmig ausgebildeten Metallbügel, insbesondere Aluminiumbügel besteht, daß das eine Kunststoffteil ebenfalls U-förmig ausgebildet ist und daß die Haftplättchen auf seiner inneren Sohle entsprechend der Anzahl der Magnetscheibchen in Vertiefun gen eingelegt und eine dünnwandige Kunststoffolie darübergespannt ist, daß das weichmagnetische Pulver für die Haftplättchen im Magnetfeld langsam ausgehärtet ist, daß sich die Öffnungen für die Magnetscheibchen in dem als Leiste ausgebildeten zweiten Kunststoffteil befinden und daß diese Leiste mit den Öffnungen nach unten in das erste Kunststoffteil eingelegt ist.

Die Löcher für ihre Befestigung können dabei in seitlichen Lappen des Metallbügels angeordnet sein.

Durch diese Maßnahmen erhält man eine Magnetcodierleiste mit hoher äußerer Formstabilität sowie einer glatten Oberfläche in den Magnetkammern und somit ungestörtes Drehverhalten der Magnetscheibchen.

Durch die dünnwandige Folie wird eine erhebliche Erhöhung der Haftkraft zwischen Magnetscheibchen und Haftplättchen gewährleistet. Da die Haftplättchen an der Innenseite der geteilten Informationsleiste aufgebracht sind, sind sie somit gegen mechanische Beanspruchung von außen geschützt. Eine Reduzierung der Abschirmung vom magnetischen Feld beim Austritt aus der Informationsleiste durch das Haftplättchen wird durch Ausrichtung der Eisenspäne im Haftplättchen erzielt. Die Ausrichtung erfolgt durch langsames Aushärten eines Eisenspäneklebstoffgemisches im Magnetfeld.

Durch die Mehrteiligkeit der Leiste besteht auch die Möglichkeit einer einfachen und zerstörungsfreien Demontage des Informationsträgers und somit ist eine schnelle und kostengünstige Reparatur im Störfall möglich.

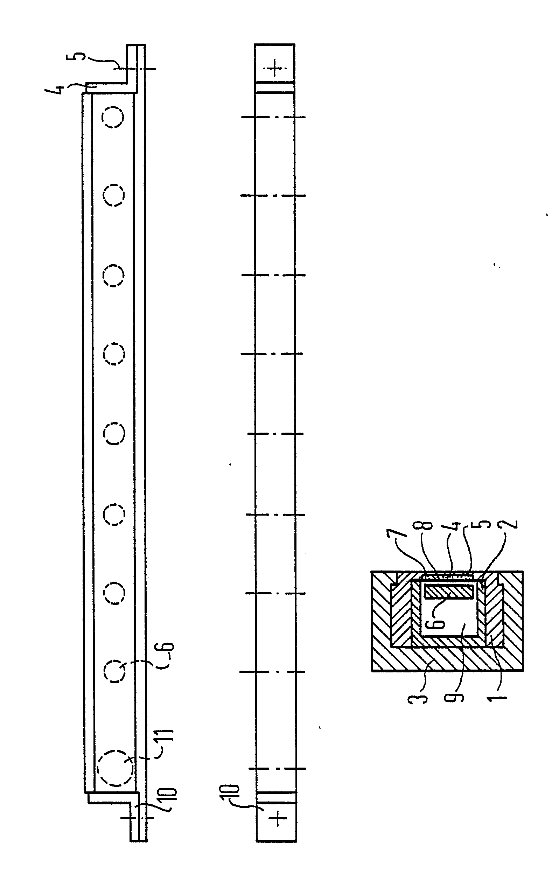

Anhand des Ausführungsbeispiels nach der Figur wird die Erfindung näher erläutert.

In der Figur ist die Draufsicht, die Seitenansicht und ein Schnitt durch eine als zylinderförmige Öffnung ausgebildete Magnetkammer gezeigt.

Die Codierleiste besteht aus zwei Kunststoffteilen 1 und 2, wobei das erste Kunststoffteil 1 U-förmig ausgebildet ist. An seiner Innensohle 5 sind entsprechend der Anzahl der verwendeten Magnetscheibchen 6 Vertiefungen 7 eingelassen, in die Haftplättchen 4 aus weichmagnetischem Pulver eingelegt sind. Über die Haftplättchen 4 wird eine dünne Kunststoffolie 8 gespannt, die auf die Innensohle 5 aufgeklebt ist.

Das zweite Kunststoffteil 2 besteht aus einer Kunststoffleiste, die entsprechend der Anzahl der verwendeten Magnetscheibchen 6 mit Öffnungen 9 versehen ist, in denen die Magnetscheibchen 6 mit etwas kleinerem Durchmesser so gelagert sind, daß sie bei Einwirken eines Magnetfeldes umklappen können. Beide Kunststoffteile sind aus Spritzguß hergestellt. Eine etwas größere Öffnung 11, in der sich ein größerer festliegender Magnet befindet, dient zur Positionskennzeichnung.

Das Kunststoffteil 2 wird nachdem die Magnetscheibchen 6 eingelegt sind, mit den Öffnungen nach unten in das Kunststoffteil 1 eingelegt, so daß die Magnetscheibchen 6 unmittelbar nur durch die Kunststoffolie 8 getrennt auf den Haftplättchen 4 aufliegen. Über beide Kunststoffteile 1, 2 wird dann ein im wesentlichen U-förmig ausgebildeter Metallbügel 3 im speziellen Fall aus Aluminium geschoben, so daß die beiden Kunststoffteile durch den Metallbügel 3 zusammengehalten werden. Die Laschen 10 zur Befestigung der gesamten Magnetcodierleiste befinden sich an den Enden des Metallbügels 3.

Bezugszeichenliste

1 Kunststoffteil
2 Kunststoffteil
3 Metallbügel
4 Haftplättchen
5 Innensohle
6 Magnetscheibchen
7 Vertiefungen
8 Kunststoffolie
9 Öffnungen
10 Laschen

**Ansprüche**

1. Magnetcodierleiste aus Kunststoff in der in zylinderförmigen, in Reihen nebeneinanderliegenden Öffnungen umklappbare Magnetscheibchen gelagert sind, die an ihren Stirnflächen unterschiedliche Polarisierung aufweisen und die in ihrer jeweiligen Endlage von Haftplättchen, die aus einer Schicht eines weichmagnetischen Pulvers bestehen, durch Weichmagnetenschuß gehalten werden, **dadurch gekennzeichnet,** daß sie aus zwei Kunststoffteilen (1,2) aus Spritzguß und in einem die beiden Kunststoffteile (1,2) umfassenden U-förmig ausgebildeten Metallbügel (3) insbesondere Aluminiumbügel besteht, daß das eine Kunststoffteil (1) ebenfalls U-förmig ausgebildet ist und daß die Haftplättchen auf seiner inneren Sohle (5) entsprechend der Anzahl der Magnetscheibchen (6) in Vertiefungen (7) eingelegt und eine dünnwandigeKunststoffolie (8) darübergespannt ist. daß das weichmagnetische Pulver für die Haftplättchen (4) im Magnetfeld langsam ausgehärtet ist, daß sich die Öffnungen (9) für die Magnetscheibchen (6) in den als Leiste ausgebildeten zweiten Kunststoffteil (2) befinden und daß diese Leiste mit den Öffnungen (9) nach unten in das erste Kunststoffteil (1) eingelegt ist.

2. Magnetcodierleiste aus Kunststoff nach Anspruch 1, **dadurch gekennzeichnet,** daß sich die Löcher für ihre Befestigung in seitlichen Klappen (10) des Metallbügels (3) befinden.

0 254 914